# EUROPÄISCHE PATENTANMELDUNG

(11) **EP 4 811 553 A1**
(43) Veröffentlichungstag der Anmeldung: **23.09.2026**
(21) Anmeldenummer: 26163653.4
(22) Anmeldetag: 10.03.2026
(51) Int. Cl.: H01R 4/64

(54) **ABSCHLUSSHÜLSE FÜR EINE ERDUNGSBRÜCKE UND ERDUNGSBRÜCKE MIT EINER SOLCHEN ABSCHLUSSHÜLSE**

(30) Priorität: 11.03.2025 DE 202025101301 U
(71) Anmelder: DEHN SE, 92318 Neumarkt i.d. OPf. (DE)
(72) Erfinder: Wolfrum, Franz, 92318 Neumarkt i.d.OPf (DE); Benz, Stefan, 92318 Neumarkt i.d.OPf (DE); Reichl, Sebastian, 92318 Neumarkt i.d.OPf (DE); Löhner, Andreas, 92318 Neumarkt i.d.OPf (DE)
(74) Vertreter: Keller Schneider Patentanwaltsgesellschaft mbH

(57) **Zusammenfassung**

Eine Abschlusshülse (110) für eine Erdungsbrücke (100) umfasst einen ersten, rohrförmig ausgebildeten Hülsenabschnitt (112) und einen sich in axialer Richtung an den ersten Hülsenabschnitt (112) anschließenden und den ersten Hülsenabschnitt (112) verschließenden zweiten Hülsenabschnitt (114), wobei der erste Hülsenabschnitt (112) als mit einem Erdungsleiterende verpressbare Aufnahme ausgebildet ist und im zweiten Hülsenabschnitt (114) eine zentrale Gewindebohrung (116) zur Anordnung eines Befestigungsmittels vorgesehen ist.

## Beschreibung

Die vorliegende Erfindung betrifft eine Abschlusshülse für eine Erdungsbrücke und eine Erdungsbrücke mit einer an wenigstens einem Ende angeordneten Abschlusshülse.

Die sichere und zuverlässige Erdung, insbesondere von Bahnstrecken ist ein essenzieller Bestandteil der Bahninfrastruktur, um sowohl den Schutz von Personen als auch die Betriebssicherheit zu gewährleisten. Bahnerdungssysteme dienen dazu, elektrisch leitfähige Komponenten mit einer definierten Rückstromführung zu verbinden und unzulässig hohe Potentialunterschiede zu vermeiden. Dies ist insbesondere im Falle eines Kurzschlusses, beispielsweise durch einen Fahrdrahtriss, von entscheidender Bedeutung. Erdungsbrücken stellen dabei ein wesentliches Element der Bahnerdung dar. Sie dienen zur Verbindung von leitfähigen Bauteilen entlang der Bahnstrecke und ermöglichen eine sichere Rückstromführung und einen Potentialausgleich. Erdungsbrücken kommen insbesondere bei in Beton eingebauten Strukturen, wie Lärmschutzwänden, Tunnelanlagen oder Stützmauern, zum Einsatz, wobei die Erdungsbrücken in der Regel bereits während der Bauphase in die Bewehrung der Betonbauteile integriert werden, sodass eine dauerhafte und kurzschlussstromfeste Verbindung gewährleistet wird. Im Zusammenhang mit der nachfolgend beschriebenen Erfindung bezeichnet der Begriff "kurzschlussfest" die Eigenschaft eines elektrischen Bauteils einem Kurzschluss über einen bestimmten Zeitraum standzuhalten, ohne dabei beschädigt zu werden oder die Funktion wesentlich zu beeinträchtigen. Im Kontext der Bahn-Richtlinie RIL 997 ist die Kurzschlussfestigkeit insbesondere bei Komponenten der Rückstromführung, Bahnerdung und Potenzialausgleich von Bedeutung, um eine sichere Ableitung von Fehlerströmen zu gewährleisten und die Betriebssicherheit von Oberleitungsanlagen zu erhöhen. Herkömmliche Erdungsbrücken sind mit Kupferbuchsen oder verkupferten Stahlbuchsen versehen, die mit einem Erdungskabel verpresst oder verschraubt sind. Eine Pressverbindung im Zusammenhang mit Erdungsleitern bezeichnet eine mechanisch und elektrisch sichere Verbindung, die durch plastische Verformung zweier metallischer Leiter mittels einer Presszange oder einer hydraulischen Presse hergestellt wird. Diese Verbindungstechnik wird insbesondere in der Bahnerdung eingesetzt, um eine niederohmige und korrosionsbeständige Verbindung zwischen Erdungsleitern und anderen leitfähigen Komponenten, wie Schienen oder Erdungsspitzen, sicherzustellen. Sie gewährleistet eine Ableitung von Fehlerströmen und trägt zur Einhaltung der Schutzmaßnahmen gegen Spannungsverschleppung bei. Hierbei besteht jedoch ein erhöhtes Risiko, dass das angeschlossene Erdungskabel durch mechanische Belastungen oder Schwingungen im Bahnbereich gelockert oder herausgezogen wird, da die Haltekraft lediglich von der Pressverbindung oder der Reibung im Inneren der Buchse zur Verfügung gestellt wird. Zudem weisen die verbauten Buchsen nur eine unzureichende Auszugsfestigkeit aus dem umgebenden Material auf. Herkömmliche Buchsen, insbesondere verkupferte Stahlbuchsen, sind anfällig für Korrosion, insbesondere in aggressiven Umgebungen mit hoher Luftfeuchtigkeit, chemischen Einflüsse und Temperaturschwankungen.

Es ist eine Aufgabe der vorliegenden Erfindung, eine Abschlusshülse an einer Erdungsbrücke bereitzustellen, die eine sichere und dauerhafte Montage ermöglicht und insbesondere für Hochstromanwendungen geeignet ist.

Die vorliegende Erfindung schafft eine Abschlusshülse für eine Erdungsbrücke mit den Merkmalen des Anspruchs 1 und eine Erdungsbrücke mit einer an wenigstens einem Ende angeordneten Abschlusshülse mit den Merkmalen des Anspruchs 17.

Bevorzugte Weiterbildungen sind Gegenstand der Unteransprüche.

Gemäß einem ersten Aspekt der Erfindung wird eine Abschlusshülse für eine Erdungsbrücke mit einem ersten, rohrförmig ausgebildeten Hülsenabschnitt und einem sich in axialer Richtung an den ersten Hülsenabschnitt anschließenden und den ersten Hülsenabschnitt verschließenden zweiten Hülsenabschnitt bereitgestellt, wobei der erste Hülsenabschnitt als mit einem Erdungsleiterende, insbesondere einem Leiterkabelende, verpressbare Aufnahme ausgebildet ist und im zweiten Hülsenabschnitt eine zentrale Gewindebohrung zur Anordnung eines Befestigungsmittels vorgesehen ist. In der vorliegenden Erfindung wird der Erdungsleiter als Kabel oder Leiterkabel bezeichnet. Diese Bezeichnung umfasst im Zusammenhang mit der Erfindung sowohl starre wie auch flexible Ausführungen des Erdungsleiters in der Erdungsbrücke.

Gemäß einem zweiten Aspekt der Erfindung wird eine Erdungsbrücke mit einer an wenigstens einem Ende angeordneten Abschlusshülse geschaffen.

Die der vorliegenden Erfindung zugrunde liegende Idee besteht darin, eine Abschlusshülse für eine Erdungsbrücke zur Verfügung zu stellen, die eine sichere Rückstromführung und einen zuverlässigen Potentialausgleich gewährleistet. Die zweiteilige Konstruktion der Hülse ist dabei darauf ausgerichtet, die Auszugssicherheit zu erhöhen, die Befestigung des Leiterkabels oder Erdungsleiters in der Erdungsbrücke zu verbessern und gleichzeitig den Übergangswiderstand zu reduzieren, um eine verbesserte elektrische Kontaktierung zu erreichen. Dies wird in der erfindungsgemäßen Erdungsbrücke durch die Verwendung hoch korrosionsfester und hoch kurzschlussstromfester Abschlussbuchsen aus Edelstahl, die mittels einer Pressverbindung sicher und dauerhaft installiert werden können, erreicht. Zudem ermöglicht die spezielle Konstruktion der Abschlusshülse eine hohe Blitzstromtragfähigkeit, sodass sie sich für Anwendungen eignet, die eine effiziente Ableitung hoher Ströme erfordern, insbesondere in Hochstromanwendungen und Blitzschutzsystemen gemäß einschlägiger Normen und Richtlinien. Hier zu nennen wäre beispielhaft die Bahn-Richtline RIL 997, die Anforderungen an Systeme definiert, die Sicherheit und Zuverlässigkeit von Bahnanlagen, insbesondere in Bezug auf die Blitzstromtragfähigkeit und den Schutz vor Überspannungen in Hochstromanwendungen, wie Oberleitungsanlagen und Bahnerdungssystemen, gewährleisten sollen. Durch die axiale Trennung zwischen zwei funktional unterschiedlichen Hülsenabschnitten kann im ersten Hülsenabschnitt eine formschlüssige Verpressung mit dem Leiterkabel zur Ausbildung einer mechanisch stabilen und verlustarmen elektrischen Verbindung geschaffen werden. Die durch die Verpressung erzielte sichere Klemmung des Kabels, insbesondere in Verbindung mit den nachfolgend beschriebenen Innenkonturen, wie beispielsweise gewindeartigen Innenkonturen, verbessert die mechanische Haltekraft und reduziert die Gefahr eines Herausziehens unter mechanischer Belastung. Der massiver ausgebildete zweite Hülsenabschnitt weist eine zentrale Gewindebohrung auf, in die ein Befestigungsmittel (z. B. eine Schraube) eingesetzt werden kann. Diese Ausführung des zweiten Hülsenabschnittes ermöglicht eine sichere Verbindung der Hülse mit einer weiteren Erdungsbrücke oder einem weiteren Erdungsleiter. Der zweite Hülsenabschnitt wird zudem während des Verpressens des ersten Hülsenabschnittes nicht verformt, sodass dieser ebenso wie die dort befindliche zentrale Gewindebohrung dimensionsstabil bleibt. Während durch die Verpressung des ersten Hülsenabschnittes die Kontaktierung zwischen dem Leitungsabschnitt des Erdungsleiters und der Abschlusshülse ein reduzierter Übergangswiderstand und eine verbesserte elektrische Kontaktierung zwischen der Erdungsbrücke und anderen leitfähigen Komponenten erreicht wird, können über die Gewindebohrung im zweiten Hülsenabschnitt weitere Leiter, wie in herkömmlichen Erdungsbrücken oder Erdungsfestpunkten, mittels Schraubverbindung angeschlossen werden. Die erfindungsgemäße Abschlusshülse überwindet die typischen Nachteile bekannter Erdungsbrücken und stellt eine verbesserte Kabelaufnahme im ersten Hülsenabschnitt mit fester und auszugssicherer Verbindung mit dem Erdungsleiter, insbesondere einem Leiterkabel, zur Verfügung und reduziert dabei den Übergangswiderstand. Der durch die Verpressung des ersten Hülsenabschnittes nicht beeinträchtigte und damit formstabile zweite Hülsenabschnitt ermöglicht des Weiteren eine Anschlussmöglichkeit für weitere Erdleiter oder Erdungsbrücken über eine Verschraubung. Die klare Trennung der Funktionen in einen ersten und einen zweiten Hülsenabschnitt ermöglicht nicht nur eine einfachere und zuverlässigere Installation der Erdungsbrücke, sondern dient auch dazu, das Leitungsmaterial im ersten Hülsenabschnitt von äußeren Einflüssen abzuschirmen. Dadurch wird verhindert, dass Feuchtigkeit oder Regenwasser über einen Gewindeeingang an das angepresste Kupferkabel des Erdungsleiters gelangt oder Wasser in das Bauwerk eindringt, wodurch das Kupferkabel zuverlässig vor Korrosion und Umwelteinflüssen geschützt wird.

Gemäß einer bevorzugten Ausführungsform der Abschlusshülse ist die Gewindebohrung als Sacklochbohrung ausgebildet. Durch die Sacklochbohrung wird verhindert, dass das Befestigungsmittel vollständig durch den zweiten Hülsenabschnitt in den ersten Hülsenabschnitt ragt. Dadurch bleibt die mechanische Integrität der Hülse erhalten, und die Kontaktfläche zwischen der Hülse und dem zu verbindenden Erdungsleiter im ersten Hülsenabschnitt wird nicht durch eine offene Bohrung geschwächt. Da die Gewindebohrung nicht durchgehend ist, bleibt die Anlagefläche der Hülse im ersten Hülsenabschnitt für den elektrischen Kontakt ununterbrochen, was den Übergangswiderstand weiter reduziert. Der zweite Hülsenabschnitt bleibt durch die Sacklochbohrung dimensionsstabil, da keine Materialverdrängung oder Verformung während der Verpressung des ersten Hülsenabschnitts auftritt. Dies erleichtert die Montage des Befestigungsmittels und sorgt für eine gleichmäßige Kraftübertragung bei der Verbindung mit einer weiteren Erdungsbrücke oder einem Erdungsleiter.

In einer Ausführungsform der Abschlusshülse weist ein Außenumfang des zweiten Hülsenabschnittes eine Mehrkantkontur, insbesondere eine Sechskantkontur auf. Dabei ist gemäß einer Weiterbildung vorgesehen, dass die Mehrkantkontur in Umfangsrichtung verlaufende Hinterschneidungen aufweist. Diese Ausführungsform ist insbesondere für den Einsatz in Betonteilen oder anderen festen Materialien vorteilhaft, in die die Erdungsbrücke eingebaut oder eingegossen wird. Die Sechskantkontur gewährleistet einen effektiven Verdrehschutz, indem sie ein Mitdrehen der Abschlusshülse beim Anziehen oder Lösen eines Befestigungselements verhindert. Die optionalen umfangsseitigen Hinterschneidungen wirken als mechanische Verankerung innerhalb des umgebenden Bauteils (z. B. Beton) und erhöhen die Auszugsfestigkeit der gesamten Erdungsbrücke, sodass diese auch bei mechanischen Belastungen, wie Schwingungen oder Setzungen des Bauwerks, dauerhaft fixiert bleibt.

Gemäß einer Ausführungsform der Abschlusshülse ist auf einem axialen Ende des zweiten Hülsenabschnittes eine Scheibe anbringbar, welche eine zentrale Bohrung aufweist, wobei die Scheibe einen gegenüber dem zweiten Hülsenabschnitt vergrößerten Durchmesser aufweist. Die vergrößerte Scheibe kann auch als Auflagefläche-auf einem einbettenden Bauteil, insbesondere einem Betonteil dienen. Die Scheibe mit zentraler Bohrung ermöglicht auch eine großflächige elektrische Kontaktierung, wodurch der Übergangswiderstand weiter reduziert wird. Durch die separate Anbringbarkeit der Scheibe kann die Abschlusshülse zudem flexibel an unterschiedliche Anforderungen angepasst werden, da die Scheibe je nach baulicher Gegebenheit in der gewünschten Größe ausgeführt werden kann. Die zentrale Bohrung ermöglicht eine sichere Befestigung mit einem Schraubelement, sodass die Montage zuverlässig und einfach durchgeführt werden kann.

Eine vorteilhafte Weiterbildung schlägt vor, dass ein gegenüber dem axialen Ende des zweiten Hülsenabschnittes vorspringender und die Gewindebohrung umgebender Kragen vorgesehen ist, wobei der Kragen mit der zentralen Bohrung der Scheibe in Eingriff bringbar ist. Durch den vorspringenden Kragen wird eine formschlüssige Verbindung zwischen der Abschlusshülse und der anbringbaren Scheibe erreicht, wodurch eine axiale und radiale Stabilisierung der Bauteile erfolgt. Durch die Integration des Kragens wird die Kontaktfläche zwischen der Scheibe und der Abschlusshülse vergrößert, da der Kragen eine definierte Anlagefläche für die zentrale Bohrung der Scheibe bereitstellt und damit einen stabileren elektrischen Kontakt zwischen beiden Bauteilen erzielt. Durch den verbesserten Kontakt wird der Übergangswiderstand verringert und Stromführung und Potentialausgleich verbessert.

Gemäß einer vorteilhaften Weiterbildung sind der Kragen und die Scheibe mechanisch, insbesondere über eine Bördelung, verbindbar. Durch die mechanische Verbindung, insbesondere die Bördelung, wird vorteilhaft eine kraft- und formschlüssige Verbindung zwischen Kragen und Scheibe geschaffen und eine dauerhafte mechanische Fixierung erreicht. Diese Verbindung verhindert vorteilhaft ein Lösen oder Verrutschen der Scheibe relativ zur Abschlusshülse, auch unter dynamischen Belastungen, Vibrationen oder thermischer Ausdehnung. Durch die kraftschlüssige Verbindung von Kragen und Scheibe entsteht zudem eine gleichmäßige Kontaktfläche, die eine optimierte elektrische Leitfähigkeit aufweist. Die Verbindung mittels Bördelung ermöglicht vorteilhaft eine schnelle und kosteneffiziente Herstellung, da keine zusätzlichen Befestigungselemente oder Schweißverbindungen erforderlich sind.

In einer weiteren Ausführungsform der Abschlusshülse ist in einer Innenwand des ersten Hülsenabschnittes eine Gewindekontur vorgesehen. Durch die Gewindekontur wird das Erdungskabel formschlüssig in den ersten Hülsenabschnitt eingebracht, insbesondere eingeschraubt. Dies führt zu einer besseren mechanischen Fixierung des Kabels, da die Gewindestruktur ein Herausziehen oder Lockern des Kabels durch mechanische Belastungen, Vibrationen oder thermische Einflüsse verhindert. Im Vergleich zu einer glatten Innenfläche sorgt die Gewindekontur für eine gleichmäßigere Krafteinleitung, wodurch das Kabel fester und sicherer in der Hülse gehalten wird. Die Gewindekontur erhöht auch vorteilhaft die Kontaktfläche zwischen der Hülse und dem Leiterkabel, wodurch eine gleichmäßige Stromübertragung über die gesamte Verbindung hinweg ermöglicht wird. Dies reduziert den elektrischen Übergangswiderstand und sorgt für eine zuverlässige Rückstromführung. Die Gewindekontur stellt auch eine definierte Struktur für eine homogene und gleichmäßige Verpressung des Erdungskabels mit dem Hülsenmaterial zur Verfügung.

In einer weiteren Ausführungsform der erfindungsgemäßen Abschlusshülse ist eine in eine Innenumfangfläche des ersten Hülsenabschnittes eingebrachte, sich in Richtung des zweiten Hülsenabschnittes aufweitende Rampenkontur vorgesehen. Die sich aufweitende Rampenkontur hat den Vorteil, dass das Leiterkabel beim Verpressen kontrolliert in Richtung der Innenwand des Hülsenabschnittes verdrängt wird. Dies führt zu einer gleichmäßigen Klemmkraftverteilung entlang des Umfangs, wodurch eine stabile Fixierung des Kabels erreicht wird. Zudem wird die mechanische Haltekraft erhöht, wodurch die Auszugsfestigkeit verbessert und ein Lösen des Kabels durch Zugkräfte oder Vibrationen verhindert wird. Durch die gezielte Verdrängung des Leiters in Richtung der Innenwand des Hülsenabschnittes entsteht eine großflächigere Anlage des Kabels an der Hülse, wodurch die elektrische Kontaktierung weiter verbessert, und der elektrische Übergangswiderstand reduziert wird. Vorteilhaft werden Rückstromführung und Potentialausgleich verbessert. Die Rampenkontur erleichtert auch die kontrollierte Führung des Kabels beim Einführen in den Hülsenabschnitt und während des Verpressvorgangs.

In einer weiteren Ausführungsform der Abschlusshülse ist wenigsten eine in eine Innenwand des ersten Hülsenabschnittes eingebrachte insbesondere am Umfang umlaufende, tangentiale Nut vorgesehen. Die Nut dient als formschlüssige Verankerung für das Leiterkabel und verleiht der Verbindung eine höhere mechanische Haltekraft. Beim Verpressen des Kabels im ersten Hülsenabschnitt wird das Material des Kabels in die Nut verdrängt, wodurch eine zusätzliche Verzahnung entsteht. Hierdurch wird das Risiko reduziert, dass sich das Kabel unter Zugbelastung oder bei Vibration löst. Die Nut vergrößert die effektive Kontaktfläche zwischen dem Leiterkabel und der Innenwand des Hülsenabschnittes und verbessert damit die elektrische Leitfähigkeit. Durch die gezielte Materialverdrängung in die Nut wird zudem sichergestellt, dass das Kabel vollflächig anliegt, wodurch Mikrospalte und Lufteinschlüsse vermieden werden, die den Übergangswiderstand erhöhen könnten. Hierdurch werden Rückstromführung und Potentialausgleich verbessert.

In einer weiteren Ausführungsform der erfindungsgemäßen Abschlusshülse ist eine auf das Erdungsleiterende, insbesondere Leiterkabelende aufgesteckte Buchse vorgesehen, wobei diese Buchse formschlüssig mit dem ersten Hülsenabschnitt in Eingriff bringbar ist. Die zusätzliche Buchse um das Leiterkabel vergrößert die Kontaktfläche zwischen Kabel und Hülse, wodurch eine bessere Stromübertragung erreicht wird. Durch den formschlüssigen Eingriff mit dem ersten Hülsenabschnitt wird eine homogene und stabile elektrische Verbindung geschaffen, die unerwünschte Widerstandserhöhungen durch ungleichmäßige Klemmung oder Kontaktstellen verhindert. Die Buchse ermöglicht eine optimierte Stromführung, da der Strom nicht nur über die Umfangsfläche, sondern auch über die an der Innenseite des Hülsenabschnittes anliegende Stirnseite übertragen werden kann. Dies verbessert die Rückstromführung und den Potentialausgleich. Die Buchse gewährleistet eine zusätzliche mechanische Verstärkung des Leiterkabels innerhalb der Hülse, wodurch die mechanische Belastbarkeit der Verbindung erhöht wird. Die formschlüssige Verbindung zwischen Buchse und Hülsenabschnitt ermöglicht eine sichere Fixierung, wodurch das Kabel bei Zugkräften, Vibrationen oder thermischen Einflüssen nicht verrutscht oder sich löst. Daraus resultiert eine erhöhte Auszugsfestigkeit. Die aufgesteckte Buchse erleichtert auch vorteilhaft die kontrollierte und exakte Positionierung des Leiterkabels innerhalb des Hülsenabschnittes, wodurch eine gleichmäßige Verpressung ermöglicht wird.

In einer Weiterbildung ist die Buchse aus einem leitfähigen Material, insbesondere aus Kupfer gebildet. Kupfer besitzt eine hohe elektrische Leitfähigkeit, wodurch die Stromübertragung zwischen dem Leiterkabel und der Abschlusshülse mit minimalen Widerstandsverlusten erfolgt. Die Verwendung einer Kupferbuchse sorgt für eine gleichmäßige Stromverteilung, da das Material an der Schnittstelle zwischen Kabel und Hülse großflächig anliegt. Dies führt zu einer Reduktion des Übergangswiderstands. Eine Kupferbuchse ermöglicht zudem auch eine verbesserte Stromübertragung über die Stirnseite. Kupfer als duktiles Material, kann sich unter mechanischer Belastung, insbesondere beim Verpressen, verformen, ohne zu brechen. Diese Eigenschaft ermöglicht eine homogene und großflächige Verbindung zwischen Buchse, Leiterkabel und Hülse beim Verpressen, wodurch eine mechanisch stabile und auszugssichere Fixierung erreicht wird. Beim Verpressen des Leiterkabels mit der Hülse kann sich das Kupfer auch in Zwischenräume und Unebenheiten verformen, wodurch die vollflächige Kontaktierung zwischen Kabel und Hülse verbessert wird. Dies erlaubt auch die Kompensation von Fertigungstoleranzen, da das Material in die vorhandenen Lücken fließt und so den mechanischen und elektrischen Anschluss verbessert.

In einer weiteren Ausführungsform der erfindungsgemäßen Abschlusshülse sind der erste Hülsenabschnitt und das Erdungsleiterende, insbesondere Leiterkabelende miteinander verpressbar. Durch die Verpressung des ersten Hülsenabschnitts mit dem Leiterkabelende wird vorteilhaft eine kraft- und formschlüssige Verbindung erreicht, die eine hohe mechanische Belastbarkeit aufweist. Das Leiterkabel wird fest in die Hülse eingepresst, wodurch eine hohe Auszugssicherheit erreicht wird. Durch die plastische Verformung des Hülsenmaterials beim Verpressen entsteht eine stabile, dauerhafte Fixierung, die keiner zusätzlichen Befestigungselemente bedarf. Durch die Verpressung wird das Leiterkabel vollflächig an die Innenwand des ersten Hülsenabschnitts angepresst, wodurch eine großflächige elektrische Kontaktierung entsteht. Dies reduziert den Übergangswiderstand an der Schnittstelle zwischen Kabel und Hülse, wodurch Leitungsverluste minimiert und eine effiziente Stromübertragung für den Rückstrom und den Potentialausgleich gewährleistet wird. Die Verpressung ermöglicht auch eine platzsparende, kompakte Konstruktion, da keine zusätzlichen Schrauben, Klemmen oder Lötverbindungen erforderlich sind. Durch das Verpressen passt sich das Leiterkabel dem Innenraum des Hülsenabschnitts optimal an, wodurch Fertigungstoleranzen ausgeglichen werden.

Gemäß einer Weiterbildung ist vorgesehen, dass an einem Außenumfang des erste Hülsenabschnittes mehrere in axialer Richtung verlaufende und radial gegenüber dem Außenumfang vorspringende Stege vorgesehen sind. Die axial verlaufenden Stege sorgen für eine formschlüssige Verankerung der Abschlusshülse im umgebenden Material, insbesondere wenn die Hülse in ein Betonteil oder eine andere feste Struktur eingebaut wird. Durch die radial vorspringenden Elemente wird ein Verdrehen der Abschlusshülse im Bauteil vorteilhaft verhindert. Durch die axialen Stege wird eine Außenkontur der Hülse ausgebildet, die gewährleistet, dass sich die Abschlusshülse bei der Verpressung gleichmäßig verformt und die Kraft optimal auf das Leiterkabel übertragen wird. Dies führt zu einer homogenen Klemmkraftverteilung im Inneren des ersten Hülsenabschnitts, wodurch das Kabel fest und sicher gehalten wird. Die axialen Stege sorgen auch für eine größere mechanische Einbindung der Abschlusshülse in das umgebende Material, insbesondere wenn die Hülse einbetoniert oder in eine feste Struktur eingesetzt wird. Dies erhöht die Widerstandskraft gegen Dreh- und Zugkräfte, sodass sich die Abschlusshülse unter mechanischer Beanspruchung nicht löst oder herausgezogen werden kann. Die Kombination aus axialen Stegen und der formschlüssigen Verpressung des Kabels führt zu einer hochfesten und dauerhaften Verbindung. Die stabilisierte Verpressung durch die Stege sorgt für eine gleichmäßige, flächige Anlage des Kabels an der Innenwand des ersten Hülsenabschnitts und reduziert damit vorteilhaft den elektrischen Übergangswiderstand. Weiter von Vorteil ist, dass die axialen Stege eine definierte Positionierung der Abschlusshülse im Bauteil ermöglichen, wodurch die Montage vereinfacht wird. Insbesondere bei automatisierten Produktionsprozessen sorgt die Stegkontur für eine wiederholgenaue Ausrichtung der Hülse. Die Herstellung der Stege kann durch gängige Fertigungsverfahren wie Fräsen, Umformen oder Gießen effizient realisiert werden. Auch können die Stege während des Verpressens ausgebildet werden.

In einer Ausführungsform ist eine axial zwischen dem ersten und zweiten Hülsenabschnitt verlaufende Durchgangsbohrung vorgesehen, wobei ein Gewindestift durch die Durchgangsbohrung in das Erdungsleiterende, insbesondere Leiterkabelende einbringbar, insbesondere einschraubbar ist. Der Gewindestift drückt dabei nach dem Verpressen stirnseitig gegen das Leiterkabel, wodurch ein zusätzlicher mechanischer und elektrischer Kontakt über die Stirnseite des Kabels entsteht. Diese zusätzliche Kontaktierung stellt eine größere Kontaktfläche zwischen Kabel und Hülse zur Verfügung, wodurch der elektrische Übergangswiderstand reduziert und eine effiziente Stromübertragung ermöglicht wird. Durch das gezielte Andrücken des Leiterkabels an die Hülseninnenwand entsteht ein zusätzlicher seitlicher Kontakt, wodurch eine gleichmäßigere Stromverteilung erreicht wird. Der Gewindestift wirkt auch als zusätzliche Fixierung des Leiterkabels innerhalb des Hülsenabschnitts, wodurch die mechanische Haltekraft der Verbindung weiter erhöht wird. Diese Ausführungsform reduziert das Risiko eines Lockerns oder Herausziehens des Kabels bei mechanischen Belastungen, insbesondere bei Vibrationen oder thermischen Ausdehnungen. Durch das Auseinanderdrücken des Kabels gegen die Innenwand der Hülse durch den eingesetzten Gewindestift entsteht eine formschlüssige Verbindung, die das Kabel langfristig in Position hält. Da der Gewindestift nach dem Verpressen in das Kabel eingeschraubt wird, kann er nachträglich justiert werden, um eine gleichmäßige und reproduzierbare Klemmkraft auf das Kabel auszuüben. Dies ermöglicht eine präzisere Anpassung an unterschiedliche Kabeldurchmesser oder Materialien, ohne dass zusätzliche Fertigungstoleranzen berücksichtigt werden müssen.

In einer Ausführungsform ist der erste und/oder der zweite Hülsenabschnitt der Abschlusshülse aus einem korrosionsbeständigen Material, insbesondere aus Edelstahl gebildet. Edelstahl ist widerstandsfähig gegenüber Korrosion, insbesondere gegen Feuchtigkeit, aggressive Umwelteinflüsse und chemische Belastungen. Dies erweist sich als besonders vorteilhaft für Erdungsanwendungen im Bahnbereich, bei denen die Abschlusshülse Feuchtigkeit und Temperaturschwankungen ausgesetzt ist. Die Verwendung von Edelstahl verhindert das Auftreten von Kontaktkorrosion, insbesondere an der Schnittstelle zwischen der Abschlusshülse und dem angeschlossenen Erdungskabel oder anderen leitfähigen Komponenten. Edelstahl weist eine hohe mechanische Festigkeit auf, wodurch die Abschlusshülse selbst unter hohen mechanischen Belastungen formstabil bleibt. Dies ist besonders vorteilhaft in Anwendungen mit mechanischen Vibrationen, Stoßbelastungen oder hohen Zugkräften, wie sie insbesondere im Bahnbereich durch fahrdynamische Kräfte auftreten. Die hohe Härte und Verschleißfestigkeit des Materials sorgt für eine dauerhaft stabile und sichere Fixierung des Leiterkabels, insbesondere bei verpressten Verbindungen und gewährleistet eine ausreichende elektrische Leitfähigkeit, wodurch die Verbindung mit einer verpressten oder verschraubten Konstruktion einen geringen Übergangswiderstand aufweist.

In einer Weiterbildung der Erdungsbrücke ist an einem der Abschlusshülse gegenüberliegenden Ende eine Befestigungslasche, ein Befestigungsöse oder eine Gewindebolzen vorgesehen. Die Befestigungslasche oder Befestigungsöse ermöglicht eine stabile und belastbare mechanische Verbindung zu weiteren leitfähigen Strukturen, wie z. B. Schienen, Brückenkonstruktionen, Schutzgittern oder Bewehrungen im Baukörper. Die mechanische Auszugssicherheit wird durch die formschlüssige Anbindung erhöht, sodass sich die Erdungsbrücke nicht durch Vibrationen oder mechanische Belastungen lösen kann. Durch die direkte Anbindung der Lasche oder Öse an eine leitfähige Struktur entsteht eine großflächige Kontaktfläche, die eine effiziente Stromübertragung gewährleistet. Hierdurch wird der elektrische Übergangswiderstand reduziert, und eine bessere Rückstromführung sowie ein zuverlässiger Potentialausgleich erreicht. Das Verbindungselement zwischen Abschlusshülse und Lasche kann aus unterschiedlichen Materialien bestehen, um spezifische Anforderungen zu erfüllen, beispielsweise aus Kupfer, Edelstahl, einem Kupfer-Stahl-Aluminium-Verbund oder als Stahlseil ausgebildet werden. Alternativ kann auch eine Ausführung mit Presskabelschuh zur Verfügung gestellt werden und die Öse oder Lasche als Bestandteil des Presskabelschuhs ausgeführt sein. In der Ausführungsformen mit einem als Gewindebolzen ausgebildeten Verbindungselement, beispielsweise in Form eines Kreuzstückes mit Anschlussgewinde kann eine Verschraubung mit einer leitfähigen Struktur vorgenommen werden. In einer weiteren Ausführungsform kann an beiden Enden der Erdungsbrücke eine erfindungsgemäße Abschlusshülse vorgesehen sein. Dies erzeugt eine symmetrische Anschlussmöglichkeit an zwei Erdungspunkten, verbessert die Flexibilität des Systems und ist besonders vorteilhaft für Anwendungen, bei denen eine durchgehende leitfähige Verbindung zwischen mehreren Strukturen hergestellt werden soll.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand der in den schematischen Figuren der Zeichnung angegebenen Ausführungsbeispiele näher erläutert.

Es zeigen:
- Fig. 1: eine perspektivische Darstellung einer Erdungsbrücke gemäß einem Ausführungsbeispiel der vorliegenden Erfindung;
- Fig. 2: eine Abschlusshülse gemäß einem Ausführungsbeispiel der vorliegenden Erfindung in Seitenansicht;
- Fig. 3: eine perspektivische Darstellung einer Abschlusshülse gemäß einem Ausführungsbeispiel der vorliegenden Erfindung;
- Fig. 4: eine perspektivische Darstellung einer Abschlusshülse gemäß einem Ausführungsbeispiel der vorliegenden Erfindung; und
- Fig. 5a-d: seitliche Schnittdarstellungen einer Abschlusshülse gemäß Ausführungsbeispielen der vorliegenden Erfindung.

In den Figuren bezeichnen gleiche Bezugszeichen gleiche bzw. funktionsgleiche Elemente.

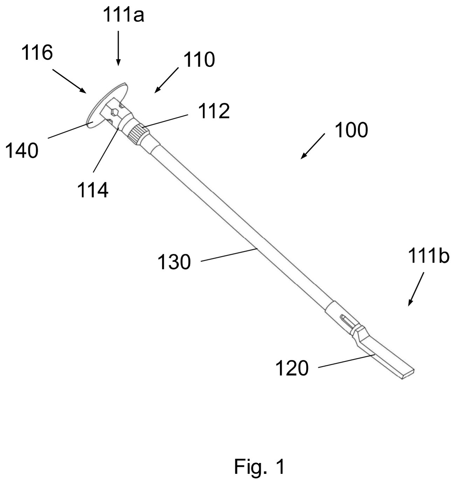

Fig. 1 zeigt eine perspektivische Darstellung einer Erdungsbrücke 100 gemäß einem Ausführungsbeispiel der vorliegenden Erfindung. Die Erdungsbrücke 100 weist an einem Ende 111a eine Abschlusshülse 110 auf, die einen ersten Hülsenabschnitt 112 und einen zweiten Hülsenabschnitt 114 umfasst. Der erste Hülsenabschnitt 112 ist zur Aufnahme und Verpressung eines in Fig. 1 durch die Abschlusshülse 110 verdeckten Leiterkabelendes ausgebildet. Der zweite Hülsenabschnitt 114 weist eine zentrale Gewindebohrung 116 zur Aufnahme eines Befestigungsmittels auf. An einem der ersten Abschlusshülse 110 gegenüberliegenden Ende 111b ist eine Befestigungslasche 120 vorgesehen. Die Erdungsbrücke 100 umfasst ein Verbindungselement 130, das sich zwischen der Abschlusshülse 110 und der Befestigungslasche 120 erstreckt. Das Verbindungselement 130 ist aus einem elektrisch leitfähigen Material, insbesondere aus Kupfer, Edelstahl oder einem Verbundmaterial, gebildet. In einer alternativen Ausführungsform kann anstelle der Befestigungslasche 120 eine zweite Abschlusshülse 110 vorgesehen sein, die entsprechend der ersten Abschlusshülse 110 ausgebildet ist. Das Verbindungselement 130 kann als Kabel oder starres Leitungsstück ausgebildet sein. Fig. 1 zeigt weiterhin eine Scheibe 140, die mit dem zweiten Hülsenabschnitt 114 verbunden ist und eine in Fig. 1 verdeckte zentrale Bohrung zur Aufnahme eines Befestigungsmittels aufweist. Die Verbindung zwischen der Scheibe 140 und dem zweiten Hülsenabschnitt 114 kann durch eine Bördelung oder eine andere mechanische Fixierung erfolgen.

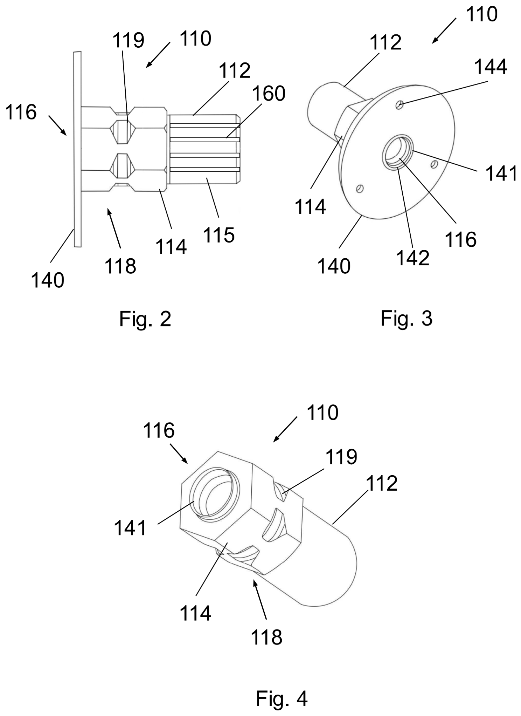

Fig. 2 zeigt eine Abschlusshülse 110 gemäß einem Ausführungsbeispiel der vorliegenden Erfindung in Seitenansicht. Die Abschlusshülse 110 umfasst einen ersten Hülsenabschnitt 112, der als rohrförmige Aufnahme für ein Leiterkabel ausgebildet ist. Der erste Hülsenabschnitt 112 ist dabei für eine formschlüssige Verpressung mit dem Leiterkabel vorgesehen. Die Abschlusshülse 110 weist weiterhin einen zweiten Hülsenabschnitt 114 auf, der sich axial an den ersten Hülsenabschnitt 112 anschließt und diesen im Innern verschließt. Der zweite Hülsenabschnitt 114 umfasst eine zentrale Gewindebohrung 116, die zur Aufnahme eines Befestigungsmittels, für beispielsweise einen Erdungsleiter, vorgesehen ist. Am Außenumfang des zweiten Hülsenabschnitts 114 ist eine Mehrkantkontur 118 ausgebildet. Diese Mehrkantkontur 118 weist im Ausführungsbeispiel eine Sechskantform auf, ohne die Erfindung hierauf zu beschränken. Zusätzlich sind in Umfangsrichtung verlaufende Hinterschneidungen 119 vorgesehen, die die Auszugssicherheit verbessern. Der erste Hülsenabschnitt 112 kann eine innenliegende Struktur zur Verbesserung der Fixierung des Leiterkabels aufweisen. Im Ausführungsbeispiel ist an dem zweiten Hülsenabschnitt 114 eine Scheibe 140 mit einer zentralen Bohrung zur Befestigung angebracht. In der äußeren Umfangswand 115 des erste Hülsenabschnittes 112 sind mehrere in axialer Richtung verlaufende und radial gegenüber der äußeren Umfangswand 115 vorspringende Stege 160 vorgesehen. Die axial verlaufenden Stege 160 sorgen für eine formschlüssige Verankerung der Abschlusshülse 110 im umgebenden Material, insbesondere wenn die Abschlusshülse 110 in ein Betonteil oder eine andere feste Struktur eingebaut wird. Durch die radial vorspringenden Elemente wird ein Verdrehen der Abschlusshülse 110 im Bauteil verhindert. Durch die axialen Stege 160 wird eine Außenkontur des ersten Hülsenabschnittes 112 ausgebildet, die gewährleistet, dass sich die Abschlusshülse 110 bei der Verpressung gleichmäßig verformt und die Kraft optimal auf das Leiterkabel übertragen wird. Dies führt zu einer homogenen Klemmkraftverteilung im Inneren des ersten Hülsenabschnitts 112, wodurch das Kabel fest und sicher gehalten wird. Die Stege 160 können durch gängige Fertigungsverfahren wie Fräsen, Umformen oder Gießen in die äußeren Umfangswand 115 eingebracht oder während des Verpressens ausgebildet werden.

Fig. 3 zeigt eine perspektivische Darstellung einer Abschlusshülse 110 gemäß einem Ausführungsbeispiel der vorliegenden Erfindung. Die Abschlusshülse 110 umfasst einen ersten Hülsenabschnitt 112, der zur Aufnahme und Verpressung eines Leiterkabelendes ausgebildet ist. Der erste Hülsenabschnitt 112 ist rohrförmig ausgebildet und erstreckt sich axial in der Abschlusshülse 110. Die Abschlusshülse 110 weist weiterhin einen zweiten Hülsenabschnitt 114 auf, der sich in axialer Richtung an den ersten Hülsenabschnitt 112 anschließt und diesen abschließt. Im zweiten Hülsenabschnitt 114 ist eine zentrale Gewindebohrung 116 vorgesehen, die zur Aufnahme eines Befestigungsmittels dient. An dem zweiten Hülsenabschnitt 114 ist eine Scheibe 140 befestigt, die ihrerseits eine zentrale Bohrung 142 zur Ausrichtung mit der Gewindebohrung 116 aufweist. Der zweite Hülsenabschnitt 114 weist einen die Gewindebohrung 116 umgreifenden Kragen 141 auf, der mit der Scheibe 140 in Eingriff steht und für eine mechanischen Fixierung, beispielsweise durch die Ausbildung einer Bördelverbindung zwischen der Scheibe 140 und dem zweiten Hülsenabschnitt 114, dient. Die Scheibe 140 erstreckt sich radial über den Umfang des zweiten Hülsenabschnitts 114 hinaus. Zusätzlich sind in der Scheibe 140 mehrere Montagebohrungen 144 zur Befestigung der Scheibe 140 an einem Untergrund vorgesehen. Die Scheibe 140 übernimmt in der Erdungsbrücke 100 eine doppelte Funktion. Sie dient als mechanischer Anschlag, um eine sichere Verankerung der Abschlusshülse 110 im umgebenden Bauteil zu gewährleisten und ein Herausziehen zu verhindern und verbessert zudem die elektrische Kontaktierung, indem sie die leitfähige Verbindung zwischen der Abschlusshülse 110 und weiteren Erdungselementen (nicht gezeigt) optimiert und dadurch den Übergangswiderstand reduziert. Zusätzlich bietet die Scheibe 140 durch ihre Montagebohrungen 144 eine einfache und sichere Befestigungsmöglichkeit für die gesamte Erdungsbrücke 100.

Fig. 4 zeigt eine perspektivische Darstellung einer Abschlusshülse 110 gemäß einem Ausführungsbeispiel der vorliegenden Erfindung. Die Abschlusshülse 110 umfasst einen ersten Hülsenabschnitt 112, der als rohrförmige Aufnahme für ein Leiterkabel ausgebildet ist. Der erste Hülsenabschnitt 112 ist dabei zur formschlüssigen Verpressung des Leiterkabels vorgesehen. Die Abschlusshülse 110 weist weiterhin einen zweiten Hülsenabschnitt 114 auf, der sich axial an den ersten Hülsenabschnitt 112 anschließt und diesen im Innern abschließt. Im zweiten Hülsenabschnitt 114 ist eine zentrale Gewindebohrung 116 vorgesehen, die zur Aufnahme eines Befestigungsmittels dient. Am Außenumfang des zweiten Hülsenabschnitts 114 ist eine Mehrkantkontur 118 ausgebildet, die im Ausführungsbeispiel eine Sechskantform aufweist. Zusätzlich sind in Umfangsrichtung verlaufende Hinterschneidungen 119 vorgesehen. Diese Hinterschneidungen 119 erstrecken sich radial in das Material der Abschlusshülse 110 und dienen der verbesserten Verankerung in einem umgebenden Bauteil. Die Abschlusshülse 110 ist im Ausführungsbeispiel ohne die im Zusammenhang mit den Fig. 2 und 3 beschriebenen Scheibe 140 dargestellt. Erkennbar ist jedoch der axial gegenüber dem zweiten Hülsenabschnitt 114 vorspringende Kragen 141, der mit einer zentralen Bohrung 142 der Scheibe 140 in Eingriff gebracht werden kann, um die Scheibe 140 relativ zur Abschlusshülse 110 zu zentrieren und eine Verbördelung zwischen der Scheibe 140 und dem zweiten Hülsenabschnitt 114 zu ermöglichen.

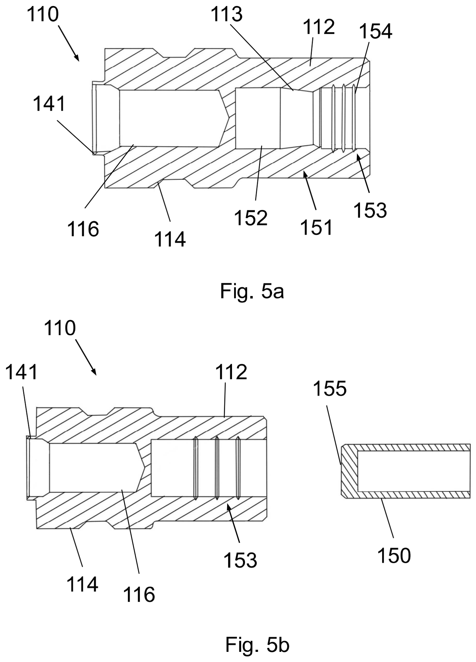

Fig. 5a zeigt eine seitliche Schnittdarstellung des Grundkörpers der Abschlusshülse 110 gemäß einem Ausführungsbeispiel der vorliegenden Erfindung. Die Abschlusshülse 110 umfasst einen ersten Hülsenabschnitt 112, der zur Aufnahme und Verpressung eines Leiterkabelendes ausgeführt ist. Der erste Hülsenabschnitt 112 weist im Ausführungsbeispiel eine Innenkontur 151 mit einer sich in Richtung des zweiten Hülsenabschnitts 114 aufweitenden Rampenkontur 113 auf. Diese dient der formschlüssigen Fixierung des Leiterkabels. Die sich aufweitende Rampenkontur 113 ermöglicht, dass das Leiterkabel beim Verpressen kontrolliert in Richtung der Innenwand 152 des ersten Hülsenabschnittes 112 verdrängt wird. Dies führt zu einer gleichmäßigen Klemmkraftverteilung entlang des Umfangs, wodurch eine stabile Fixierung des Kabels erreicht wird. Zudem wird die mechanische Haltekraft erhöht und die Auszugsfestigkeit verbessert, da ein Lösen des Kabels durch Zugkräfte oder Vibrationen verhindert wird. Durch die gezielte Verdrängung des Leiters in Richtung der Innenwand 152 des ersten Hülsenabschnittes 112 entsteht eine großflächigere Anlage des Kabels an der Abschlusshülse 110, wodurch die elektrische Kontaktierung weiter verbessert und der elektrische Übergangswiderstand reduziert wird. Die Rampenkontur 113 erleichtert auch die kontrollierte Führung des Kabels während des Einführens in den ersten Hülsenabschnitt 112 und des Verpressvorgangs.

An der Innenwand 152 des ersten Hülsenabschnitts 112 ist zusätzlich eine Nutkontur 153 durch im Ausführungsbeispiel drei in axialer Richtung beabstandet eingebrachte Nuten 154 ausgebildet. Die Nutkontur 153 erstreckt sich über einen Teil der Innenwand 152 des ersten Hülsenabschnittes 112 und dient zur verbesserten Kontaktierung und Fixierung des eingesetzten Kabelendes.

Fig. 5b zeigt eine seitliche Schnittdarstellung einer Abschlusshülse 110 gemäß einem weiteren Ausführungsbeispiel der vorliegenden Erfindung. Die Abschlusshülse 110 umfasst einen ersten Hülsenabschnitt 112, der als rohrförmige Aufnahme zur Verpressung eines Leiterkabelendes ausgebildet ist. Der erste Hülsenabschnitt 112 weist in seiner Innenwand eine Nutkontur 153 auf, die zur verbesserten Fixierung des Leiterkabels dient. Der zweite Hülsenabschnitt 114 ist axial an den ersten Hülsenabschnitt 112 angeschlossen und weist eine zentrale Bohrung 116 zur Aufnahme eines Befestigungsmittels auf. Ebenfalls zu erkennen ist der umlaufende Kragen 141 zur Anordnung der Scheibe 140 (vgl. Fig. 2 und 3). Zusätzlich ist in Fig. 5b eine Buchse 150 dargestellt, die als separates Bauteil vorgesehen ist und in den ersten Hülsenabschnitt 112 eingesetzt werden kann. Die Buchse 150 ist rohrförmig ausgebildet und für eine formschlüssige Verbindung mit dem ersten Hülsenabschnitts 112 ausgelegt. Die Buchse 150 ist zur Aufnahme des Leiterkabelendes vorgesehen, wobei das Leiterkabel innerhalb der Buchse 150 positioniert und verpresst werden kann. Die das Leiterkabelende aufnehmende Buchse 150 vergrößert die Kontaktfläche zwischen Kabel und Abschlusshülse 110, wodurch eine bessere Stromübertragung erreicht wird. Durch den formschlüssigen Eingriff mit dem ersten Hülsenabschnitt 112 wird eine homogene und stabile elektrische Verbindung geschaffen, die unerwünschte Widerstandserhöhungen durch ungleichmäßige Klemmung oder Kontaktstellen verhindert. Die Buchse 150 ermöglicht eine optimierte Stromführung, da der Strom nicht nur über die Umfangsfläche, sondern auch über die an der Innenseite des ersten Hülsenabschnittes 112 anliegende Stirnseite 155 der Buchse 150 übertragen werden kann. Dies verbessert die Rückstromführung und den Potentialausgleich. Die aufgesteckte Buchse 150 erleichtert auch vorteilhaft die kontrollierte und exakte Positionierung des Leiterkabels innerhalb des ersten Hülsenabschnittes 112, wodurch eine gleichmäßige Verpressung ermöglicht wird. Die Buchse 150 ist aus einem leitfähigen Material, insbesondere aus Kupfer gebildet. Und kann sich beim Verpressen, verformen. Diese Eigenschaft ermöglicht eine homogene und großflächige Verbindung zwischen Buchse 150, Leiterkabel und Abschlusshülse 110, wodurch eine mechanisch stabile und auszugssichere Fixierung erreicht wird. Beim Verpressen des Leiterkabels mit der Abschlusshülse 110 kann sich das Kupfer in Zwischenräume und Unebenheiten verformen, wodurch eine vollflächige Kontaktierung zwischen Kabel und Abschlusshülse 110 sichergestellt wird.

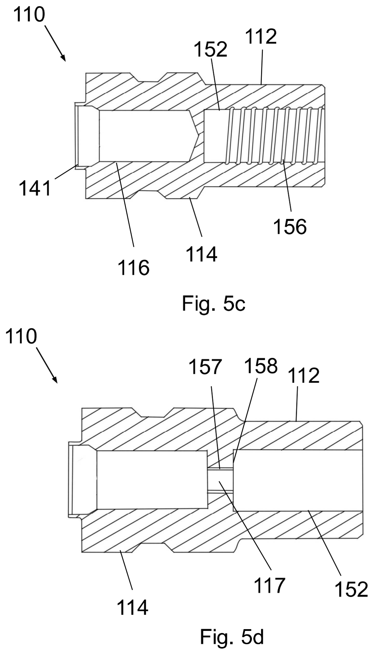

Fig. 5c zeigt eine seitliche Schnittdarstellung einer Abschlusshülse 110 gemäß einem weiteren Ausführungsbeispiel der vorliegenden Erfindung. Die Abschlusshülse 110 umfasst einen ersten Hülsenabschnitt 112, der zur Aufnahme und Verpressung eines Leiterkabelendes ausgebildet ist. Der erste Hülsenabschnitt 112 weist an seiner Innenwand 152 eine Gewindekontur 156 auf. Die Gewindekontur 156 erstreckt sich über einen Teil der Innenwand 152 des ersten Hülsenabschnitts 112 und dient zur verbesserten mechanischen Fixierung des Leiterkabels, das in den ersten Hülsenabschnitt 112 während der Montage und vor der Verpressung eingeschraubt werden kann. Durch das Einbringen des Erdungskabels in die Gewindekontur 156 wird ein formschlüssiger Sitz erreicht, der das Leiterkabel gegen axiale und radiale Bewegungen sichert. Dies verhindert ein unbeabsichtigtes Herausziehen oder Lockern des Kabels vor dem Verpressen. Die Gewindekontur 156 vergrößert die Kontaktfläche zwischen der Innenwand 152 des ersten Hülsenabschnitts 112 und dem Leiterkabel, wodurch eine gleichmäßige Stromübertragung über die gesamte Verbindung hinweg ermöglicht wird. Dies reduziert den elektrischen Übergangswiderstand und sorgt für eine zuverlässige Rückstromführung. Die Gewindestruktur 156 bildet zudem eine definierte Struktur für eine gleichmäßige Verpressung des Leiterkabels aus, wodurch eine verbesserte elektrische Kontaktierung zwischen der Abschlusshülse 110 und dem Leiterkabel gewährleistet wird. Der zweite Hülsenabschnitt 114 schließt sich axial an den ersten Hülsenabschnitt 112 an und weist auch hier eine zentrale Gewindebohrung 116 zur Aufnahme eines Befestigungsmittels auf. Ebenfalls zu erkennen ist der umlaufende Kragen 141 zur Anordnung der Scheibe 140 (vgl. Fig. 2 und 3).

Fig. 5d zeigt eine seitliche Schnittdarstellung einer Abschlusshülse 110 gemäß einem weiteren Ausführungsbeispiel der vorliegenden Erfindung. Die Abschlusshülse 110 umfasst einen ersten Hülsenabschnitt 112, der als rohrförmige Aufnahme zur Verpressung eines Leiterkabelendes ausgebildet ist. Der erste Hülsenabschnitt 112 ist axial mit einem zweiten Hülsenabschnitt 114 verbunden. Die Hülsenabschnitte 112, 114 weisen eine sich in axialer Richtung zwischen diesen erstreckende, zentral angeordnete Durchgangsbohrung 117 auf, die mit einem Innengewinde 157 zur Aufnahme eines Gewindestiftes (nicht dargestellt) ausgestattet ist. Über die Durchgangsbohrung 117 kann der Gewindestift nach dem Verpressen in das Leiterkabelende eingeschraubt werden. Durch das Einschrauben des Gewindestifts wird das Leiterkabel an den stirnseitigen Innenwandabschnitt 158 des ersten Hülsenabschnitts 112 gezogen. Dies bewirkt eine zusätzliche mechanische Fixierung des Leiterkabels und verbessert die elektrische Kontaktierung zwischen dem Leiterkabel und dem Innenwandabschnitt 158 des ersten Hülsenabschnitts 112. Zudem wird das Leiterkabel durch das Einbringen des Gewindestifts radial nach außen verdrängt, wodurch eine flächigere Anlage an der Innenwand 152 des ersten Hülsenabschnitts 112 erreicht wird.

Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar.

### Bezugszeichenliste

- 100: Erdungsbrücke
- 110: Abschlusshülse
- 111a, b: Ende
- 112: erster Hülsenabschnitt
- 113: Rampenkontur
- 114: zweiter Hülsenabschnitt
- 115: Umfangswand
- 116: Gewindebohrung
- 117: Durchgangsbohrung
- 118: Mehrkantkontur
- 119: Hinterschneidung
- 120: Befestigungslasche
- 130: Verbindungselement
- 140: Scheibe
- 141: Kragen
- 142: zentrale Bohrung
- 144: Montagebohrung
- 150: Buchse
- 151: Innenkontur
- 152: Innenwand
- 153: Nutkontur
- 154: Nut
- 155: Stirnseite
- 156: Gewindekontur
- 157: Innengewinde
- 158: Innenwandabschnitt
- 160: Steg

## Patentansprüche

1. Abschlusshülse (110) für eine Erdungsbrücke (100) mit einem ersten, rohrförmig ausgebildeten Hülsenabschnitt (112) und einem sich in axialer Richtung an den ersten Hülsenabschnitt (112) anschließenden und den ersten Hülsenabschnitt (112) verschließenden zweiten Hülsenabschnitt (114), wobei der erste Hülsenabschnitt (112) als mit einem Erdungsleiterende verpressbare Aufnahme ausgebildet ist und im zweiten Hülsenabschnitt (114) eine zentrale Gewindebohrung (116) zur Anordnung eines Befestigungsmittels vorgesehen ist.

2. Abschlusshülse (110) nach Anspruch 1, **dadurch gekennzeichnet, dass** die Gewindebohrung (116) als Sacklochbohrung ausgebildet ist.

3. Abschlusshülse (110) nach Anspruch 1 oder 2, **dadurch gekennzeichnet, dass** ein Außenumfang des zweiten Hülsenabschnittes (114) eine Mehrkantkontur (118), insbesondere eine Sechskantkontur aufweist.

4. Abschlusshülse (110) nach Anspruch 3, **dadurch gekennzeichnet, dass** die Mehrkantkontur (118) in Umfangsrichtung verlaufende Hinterschneidungen (119) aufweist.

5. Abschlusshülse (110) nach einem der vorhergehenden Ansprüche, **dadurch gekennzeichnet, dass** auf einem axialen Ende des zweiten Hülsenabschnittes (114) eine Scheibe (140) anbringbar ist, wobei die Scheibe (140) eine zentrale Bohrung (142) aufweist, und wobei die Scheibe (140) einen gegenüber dem zweiten Hülsenabschnitt (114) vergrößerten Durchmesser aufweist.

6. Abschlusshülse (110) nach Anspruch 5, **dadurch gekennzeichnet, dass** ein gegenüber dem axialen Ende vorspringender, die Gewindebohrung (116) umgebender Kragen (141) vorgesehen ist, wobei der Kragen (141) mit der zentralen Bohrung (142) der Scheibe (140) in Eingriff bringbar ist.

7. Abschlusshülse (110) nach Anspruch 6, **dadurch gekennzeichnet, dass** der Kragen (141) und die Scheibe (140) mechanisch, insbesondere über eine Bördelung, verbindbar sind.

8. Abschlusshülse (110) nach einem der vorhergehenden Ansprüche, **dadurch gekennzeichnet, dass** in einer Innenwand (152) des ersten Hülsenabschnittes (112) eine Gewindekontur (156) vorgesehen ist und/oder eine in eine Innenwand (152) des ersten Hülsenabschnittes (112) eingebrachte, sich in Richtung des zweiten Hülsenabschnittes (114) aufweitende, Rampenkontur (113) vorgesehen ist und/oder wenigstens eine in eine Innenwand (152) des ersten Hülsenabschnittes (112) eingebrachte Nut (154) vorgesehen ist.

9. Abschlusshülse (110) nach einem der vorhergehenden Ansprüche, **dadurch gekennzeichnet, dass** eine auf das Erdungsleiterende aufgesteckte Buchse (150) vorgesehen ist, wobei die Buchse (150) formschlüssig mit dem ersten Hülsenabschnitt (112) in Eingriff bringbar ist.

10. Abschlusshülse (110) nach Anspruch 9, **dadurch gekennzeichnet, dass** die Buchse (150) aus einem leitfähigen Material, insbesondere aus Kupfer gebildet ist.

11. Abschlusshülse (110) nach einem der vorhergehenden Ansprüche, **dadurch gekennzeichnet, dass** der erste Hülsenabschnitt (112) mit dem Erdungsleiterende verpressbar ist und/oder dass an einem Außenumfang des ersten Hülsenabschnittes (112) mehrere in axialer Richtung verlaufende und radial gegenüber dem Außenumfang vorspringende Stege (160) vorgesehen sind.

12. Abschlusshülse (110) nach einem der vorhergehenden Ansprüche, **dadurch gekennzeichnet, dass** eine axial zwischen dem ersten und zweiten Hülsenabschnitt (112, 114) verlaufende Durchgangsbohrung (117) vorgesehen ist, wobei ein Gewindestift durch die Durchgangsbohrung (117) in das Erdungsleiterende einbringbar, insbesondere einschraubbar ist.

13. Abschlusshülse (110) nach einem der vorhergehenden Ansprüche, **dadurch gekennzeichnet, dass** der erste und/oder der zweite Hülsenabschnitt (112, 114) aus einem korrosionsbeständigen Material, insbesondere aus Edelstahl gebildet ist.

14. Erdungsbrücke (100) mit einer an wenigstens einem Ende (111a, b) angeordneten Abschlusshülse (110) nach einem der Ansprüche 1 bis 13.

15. Erdungsbrücke (100) nach Anspruch 14, **dadurch gekennzeichnet, dass** an einem der Abschlusshülse (110) gegenüberliegenden zweiten Ende eine Befestigungslasche (120), eine Befestigungsöse oder ein Gewindebolzen vorgesehen ist.
